# EUROPEAN PATENT SPECIFICATION

(11) **EP 3 524 859 B1**
(45) Date of publication and mention of the grant of the patent: **09.09.2020**
(21) Application number: 18155657.2
(22) Date of filing: 08.02.2018
(51) Int. Cl.: F16H 61/452

(54) **HYDRAULIC ARRANGEMENT, HYDRAULIC SYSTEM, AND HYDRAULICALLY DRIVABLE VEHICLE**
HYDRAULIKANORDNUNG, HYDRAULIKSYSTEM UND HYDRAULISCH ANTREIBBARES FAHRZEUG
DISPOSITIF HYDRAULIQUE, SYSTÈME HYDRAULIQUE ET VÉHICULE À ENTRAÎNEMENT HYDRAULIQUE

(43) Date of publication of application: 14.08.2019
(73) Proprietor: Robert Bosch GmbH, 70442 Stuttgart (DE)
(72) Inventor: Edward, Iain, North Queensferry, Fife KYIIIEDC (GB); Hare, David, Kirkliston, EH29 9GH (GB)

(56) References cited:
- DE-A1- 19 602 196
- US-A- 4 958 696
- US-A1- 2004 228 733
- US-B2- 7 770 685

## Description

### Field of the Invention

The present invention relates to a hydraulic arrangement, in particular according to the preamble of claim 1. The present invention also relates to a hydraulic system and a hydraulically drivable vehicle.

### Background of the Invention

In many hydraulically driven vehicles a pump provides flow and pressure to four motors, wherein two motors are provided for each side of the vehicle, each driving a respective wheel. Typically there are two circuit types: the first is a parallel connection wherein the two ports of each motor are attached directly to the two ports of the pump. The second is a series connection wherein for each side the motors are connected in series. The series connected motors for the one side of the vehicle and the series connected motors for the other side of the vehicle are typically connected to the pump in parallel.

Each connection type has drawbacks where the other type would perform better. In the case of parallel connection, additional flow (and therefore a larger pump) is required to provide the same vehicle speed. Also if one of the wheels slips due to loss of traction, torque is lost to all motors since substantially all flow is through the motor of the slipping wheel. A series circuit provides less motor torque, and if a wheel on any side encounters an obstruction both of the motors on that side will stop.

Attempts have been made in the prior art to provide a hydraulic vehicle having one of the above connection types while mitigating its respective drawbacks.

US 7770685 B2 discloses a hydraulic arrangement for driving four wheels of the vehicle through a parallel-type circuit, having four flow dividers to ensure substantially the same flow rate to each wheel. Wheel slip is addressed using a complicated construction. Blocking one motor could substantially stop all remaining motors from rotating.

US 2009/0014225 A1 discloses a hydraulic arrangement for driving four wheels of the vehicle; two motors are connected in series on each side of the vehicle. A motor can be bypassed so that the motors can rotate at different speeds from each other. But torque is lost to the bypassed motor. Also both motors on one side of the vehicle will stop if the un-bypassed motor becomes blocked; the torque performance of a parallel circuit is not achieved; and the arrangement is complex and has many parts.
Hydraulic arrangements are known from DE 196 02 196 A1 and US 2004/228733 A1.

### Summary of the Invention

It is an object of the invention to provide the benefits of both series and parallel hydraulic drive arrangements. It is a further object to provide a simple construction.

The object is achieved by the subject-matter of claim 1. Advantageous further developments are laid out in the dependent claims.

In the following the term "connected" is understood to mean in fluid communication, e.g. by pressurizable lines.

A hydraulic arrangement according to the invention comprises: a pressure source, two hydraulic machines, and at least one valve; the at least one valve is configured for changing a connection of the hydraulic machines between a series connection and a parallel connection.

In other words the arrangement can change to and from a series and a parallel connection (i.e. of one hydraulic machine to the other) by means of an actuation of at least one valve. The advantages of each circuit type can be exploited depending on the extent to which each connection is set. In the case of driving a vehicle's wheels, the connection can change away from series toward parallel when an obstruction is encountered at a wheel and/or a higher torque is required. Equally the connection can change away from parallel toward series when wheel slip is encountered or higher speeds are required.
In an aspect of the invention the at least one valve may include a proportional valve, and preferably may be at least one proportional valve. In other words a continuously adjustable valve can support the changing of the circuit between a series connection and a parallel connection. At any position part way between the end positions of the valve the effect is proportionally achieved of decreasing torque to any machine that is rotating faster than the others (e.g. if a wheel is slipping). The benefits of a series connection and of a parallel connection are simultaneously and proportionally obtained by means of the position of the proportional valve.

In another aspect of the invention only one valve may be configured for changing the connection of the hydraulic machines between the series connection and the parallel connection. In other words actuating only one valve changes the connection. It is not necessary to actuate many valves. The construction is simplified.

Preferably the at least one valve may have a normal position or positions, corresponding to the series and/or the parallel connection.

A first port of the pressure source is connected to a second port of the second hydraulic machine; a second port of the pressure source is connected to a first port of the first hydraulic machine.

The at least one valve may be a single valve and may preferably comprise a first position or first positions, corresponding to a series connection, and a second position or second positions, corresponding to a parallel connection.

At least one valve has a spool movable between at least two positions. The first machine's second port and the second machine's first port are connected to the valve.

In this way the circuit can change between the series and parallel connections by means of actuating only one valve. The series and parallel circuits can share many common lines; a simple construction having few parts is achieved.

The valve position is dependent on a pressure of the pressure source, such as on a high pressure side and/or on a low pressure side. In other words the valve actuation may be in accordance with the pressure change in a line.

In this way the valve position (i.e. the position of any spool in the valve) can be shifted by the pressure line(s) exiting the pressure source. If the valve is configured to be normally in a position corresponding to the series connection, the parallel circuit is activated when the pressure in a line (e.g. high pressure line to the second port of pressure source) rises above a predetermined value. The high pressure is typically only available at low speeds due to the power limitations of any prime mover (e.g. diesel engine) driving the pressure source (e.g. pump). In normal running, e.g. when the torque requirements of the vehicle are low, the circuit remains in series mode and is therefore able to reach higher machine speeds. If the parallel connection is active and one of the machines starts to slip under no load (e.g. a wheel starts to slip), the pressure in the high pressure line will drop and the valve position will move towards the series position, reducing slip and maintaining torque to all wheels. In the case that the valve is a proportional valve, a metering effect over the valve is achieved, causing the pressure drop across the slipping machine to decrease and therefore adjust the output torque until the cause of slipping subsides. Those wheels which retain good traction will retain most of their output torque due to their lower speed and therefore lower flow and lower metering effect in the valve.

Preferably the at least one valve may comprise a valve position which is dependent on a pressure difference, such as between a high pressure line and a low pressure line.

In another aspect of the invention, the at least one valve may comprise a valve position which is dependent on a flow rate through a hydraulic machine.

In this way the change of valve position is in accordance with a flow rate, more specifically with a rotational speed of a machine. Valve actuation can occur at higher vehicle speeds and/or when a wheel slips. Therefore valve actuation toward the series position occurs automatically when the machine speed conditions require it.

Preferably the arrangement may be configured so that an increased flow rate though at least one machine may change the valve position from a parallel position toward a series position.

In another aspect of the invention a bypass line having a restrictor may be connected across a hydraulic machine when the hydraulic machines are connected in series.

In this way pressures within the circuit are kept low so efficiency is improved. Also differences in flow rate between the two machines is allowed.

Preferably, the bypass line may be configured to be fluid-conducting in the case of the parallel connection. Further preferably, the valve position may be configured to depend on the pressure drop across the restrictor. In this way the valve position can depend on a flow rate in accordance with a pressure drop, by means of a simple construction.

In a second preferable embodiment, which is in accordance with the present aspect and the first preferable embodiment, the valve may comprise a spool. In a first position or first positions (series position/s) the first machine's second port may be connected by the valve to the second machine's first port, and the valve may block the first and second bypass lines. In a second position or second positions (parallel position/s) the first machine's second port may be connected to the second bypass line, and the second machine's first port may be connected to the first bypass line. An urging means such as a spring may be configured to urge the spool towards the first position or positions, preferably by urging a first end of the spool.

A first and a second pilot line may be connected to the first and second bypass lines respectively and meet at a node. The second end of the spool may be exposed to the pressure at the node so that said pressure can act against the force of the urging means. The pilot lines may pass through a blocking device (such as a shuttle valve) configured to prevent flow away from the node through either the first or second port (whichever is connected to the lower pressure). When the pressure at the node exceeds a threshold, the force due to said pressure starts to overcome the urging force of the urging means, and the spool moves toward the second position. When the node pressure decreases, the spool is urged toward the first position or positions.

In this way the spool can be normally in the series position and be shifted by the pressure lines of the pressure source. An automatic adjustment between series and parallel connection is achieved with a simple construction. A threshold pilot pressure can be easily set according to operational requirements, for example by selecting a suitable urging means or selecting the surface area of the spool end exposed to the pilot pressure. In the case that the valve is a proportional valve, automatic and continuously variable adjustment between series and parallel connection is achieved with a simple construction.

In a third preferable embodiment, which is in accordance with the present aspect and the first preferable embodiment, the valve spool may have three positions. In the first position or first positions (first series position/s) the first machine's second port may be connected at the valve to the second machine's first port and also to the second bypass line; flow out of the valve towards the first machine may be blocked; the first bypass line may be blocked at the valve. The second position (parallel position) may be a middle position corresponding to that of the second position of the first and second preferable embodiments. In the third position or positions (second series position/s) the second machine's first port may be connected at the valve to the first machine's second port and to the first bypass line; flow out of the valve towards the second machine may be blocked; the second bypass line may be blocked at the valve. Preferably the spool may be normally in the parallel position.

In this way a normally parallel arrangement can change to a series arrangement. Even under a purely series connection, one of the bypass lines (which one will depend on the direction of rotation) will allow flow to bypass the machine that is shunted by the bypass line. A low pressure within the arrangement is maintained when vehicle traction is good, which is desirable for improving efficiency. These advantages are achieved in either flow direction.

Further preferably a first restrictor may be provided in the first bypass line. A second restrictor may be provided in the second bypass line. A first pilot line may connect a position on the first bypass line, which is on the side of the first restrictor further from the valve, to the first end of the spool, to allow a pressure in the first pilot line to urge the spool further toward the first position or positions. A second pilot line may connect a position on the first bypass line, which is on the side of the first restrictor nearer to the valve, to the second end of the spool, to allow a pressure in the second pilot line to urge the spool further toward the third position or positions. A third pilot line may connect a position on the second bypass line, which is on the side of the second restrictor nearer the valve, to the first end of the spool, to allow a pressure in the third pilot line to urge the spool further toward the first position or first positions. A fourth pilot line may connect the second bypass line, at a position which is on the side of the second restrictor further from the valve, to the second end of the spool, to allow a pressure in the fourth pilot line to urge the spool further toward the third position or positions.

A first a second urging means (e.g. springs) may preferably be provided at respective ends of the spool so as to urge the spool in opposite directions. Under no other forces, the spool may be normally in the second position (parallel position).

In this way the first and third positions of the spool correspond to series connections under respective flow directions, and the second position corresponds to a parallel connection. The spool is urged from the parallel position towards one of the series positions (depending on direction of machine rotation) when the flow through at least one restrictor increases. This increased flow will happen e.g. either at higher vehicle speeds or when a wheel slips, i.e. under conditions where series mode is normally desired. The resulting pressure drop leads to a net force on the spool toward the first or third position (or positions), depending on flow direction. Equally when the flow rate drops the spool is urged back toward the second position (parallel position) under the returning forces of the urging means. A proportional valve can position the spool part way between either the first and second positions, or between the second and third positions. Therefore a normally parallel connection automatically shifting toward the series connection is achieved with a simple construction. Since, for each direction of rotation under series connection, the valve position connects a port of one machine to a respective bypass line, flow across the restrictor, and so spool movement, is maintained.

In another aspect of the invention, the at least one valve may be integrated with a hydraulic machine. In this way a simple and compact arrangement is achieved.

In another aspect of the invention, the at least one valve may be actuatable by any of hydraulic, electrical, and manual means.

In another aspect of the invention, the at least one valve may comprise ports connecting the machines and the pump into a circuit, and preferably may comprise also an auxiliary port for connecting at least one other component into the circuit, such as an anti-cavitation means or auxiliary hydraulic equipment.

A hydraulic system according to the invention may comprise two or more hydraulic arrangements according to the invention.

Preferably the hydraulic arrangements may be connected in parallel to a common pressure source. This allows the flow rates for each arrangement to differ.

In another aspect of the invention two or more valves may be integrated into a single valve assembly. In other words the functions of the valves are integrated into a single valve (preferably by means of a single spool). The construction is further simplified.

A hydraulically drivable vehicle according to the invention comprises the hydraulic system and a plurality of wheels, such as three, four, six, or eight wheels; the wheels are drivably coupled to the hydraulic machines. Preferably each wheel may be drivably coupled to a respective hydraulic machine. Alternatively each hydraulic machine may preferably be drivingly coupled to a respective plurality of wheels, such as via at least one axle and/or at least one chain.

Preferably the wheels on each side of the vehicle may be drivably coupled to the machines of a respective hydraulic arrangement. In this way the wheels on the one side of the vehicle can rotate at different speeds from the wheels on the other side of the vehicle.

Preferably at least one hydraulic machine may be configured as a motor.

Preferably at least one of the above-mentioned restrictors may be configured as an orifice plate or other throttling restriction.

Preferably the pressure source may be a variable and/or bidirectional pressure source, such as a pump.

### Description of Figures

Preferable exemplary embodiments of the invention are explained in detail in the following, with the help of the drawings, wherein like numerals are used to represent like elements and wherein:
Fig. 1 shows a schematic representation of a hydraulic arrangement according to a first exemplary embodiment of the invention, and
Fig. 2 shows a schematic representation of a hydraulic arrangement according to a second exemplary embodiment of the invention.

### First Exemplary Embodiment

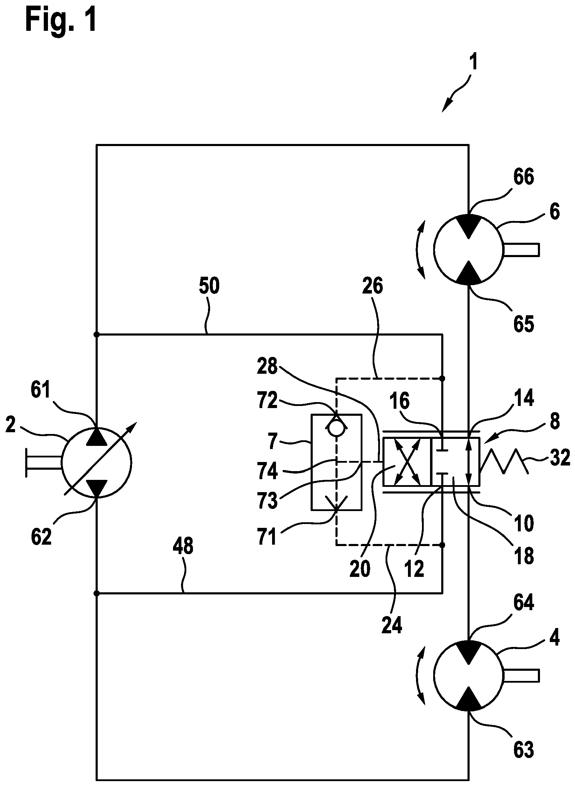

Fig. 1 shows a hydraulic arrangement 1 of a first exemplary embodiment. The arrangement 1 comprises a hydromachine in the form of a variable reversible hydraulic pump 2 as a pressure source, having a first port 61 and a second port 62; and a first 4 and a second 6 hydromachine, each in the form of a hydraulic motor having a respective first port 63, 65 and a respective second port 64, 66. The motors 4, 6 can be connected to a front and a rear wheel respectively on one side of a vehicle (not shown). The pump's second port 62 is connected to the first port 63 of the first motor 4 via a line. The second port 64 of the first motor 4 is connected to a proportional valve 8 having a spool. The valve 8 has four ports 10, 12, 14, 16. The second port 64 of the first motor 4 is connected to the valve's first port 10. The valve's third port 14 is connected to the first port 65 of the second motor 6. The second port 66 of the second motor 6 is connected via a line to the first port 61 of the pump 2.

The valve's spool can move between first positions 18 (series positions) for a series connection of the motors 4, 6 and second positions 20 (parallel positions) for parallel connection of the motors 4, 6. A spring 32 as urging means urges a first end (right end in Fig. 1) of the spool in a first direction toward the series positions 18. In the first positions 18 the first port 10 and the third port 14 are connected together and the second port 12 and fourth port 16 are disconnected. In the second positions 20 the first port 10 and the fourth port 16 are connected together and the second port 12 and the third port 14 are connected together.

The pump's second port 62 is further connected to the valve's second port 12 via a first bypass line 48. In other words, at a position on the line between the pump's second port 62 and the first motor's first port 63, the first bypass line 48 branches off from a T-junction and connects to the valve's second port 12. The valve's fourth port 16 is further connected to the pump's first port 61 via a second bypass line 50. In other words at a position on the line between the pump's first port 61 and the second motor's first port 66 the second bypass 50 line branches off from a T-junction and leads to the valve's fourth port 16.

A first pilot line 24 for transmitting the fluid pressure from the first bypass line 48 is connected at a T-junction at a position on the first bypass line 48 - especially near the valve's second port 12 - to a first port 71 of a shuttle valve 7. A second pilot line 26 for transmitting fluid pressure from the second bypass line 50 is connected at a T-junction at a position on the second bypass line 50 - especially near the valve's fourth port 16 - to a second port 72 of the shuttle valve 7. The pilot lines 24, 26 from the first 71 and second 72 port respectively of the shuttle valve 7 meet at a node 74 within the shuttle valve 7 from which a path 28 branches off from a T-junction, as a third pilot line 28 to exit the shuttle valve 7 at a third port 73. The pressure at the third port 73 of the shuttle valve 7 is transmitted via the third pilot line 28 to the surface of a second end of the spool (left end in Fig. 1). A movable seal (e.g. metal ball) within the shuttle valve 7 prevents flow through the shuttle valve 7 into one of the first 71 and second 72 port. The respectively higher pressure of the pilot lines 24, 26 is transmitted via the shuttle valve 7 to the valve 8 and urges the spool of the valve 8 in the direction of the second position.

The position of the valve 8 can change in accordance with the force balance on the spool due to the spring 32 urging the spool to the first positions 18 and the pilot fluid urging the spool to the second positions 20.

The function of the hydraulic arrangement 1 according to the first exemplary embodiment is described as follows. At first the motors 4, 6 are in series connection, i.e. the valve spool is in the series positions 18. When the pump 2 runs, fluid flows e.g. in a counterclockwise direction, i.e. through the first motor 4 which rotates. It then flows into the valve's first port 10 which is connected to the valve's third port 14 so that the fluid continues to the second motor 6 which rotates. After passing through the second motor 6 it returns to the pump 2. In the first spool positions 18 the second 12 and fourth 16 ports of the valve 8 are blocked, so that fluid does not flow through the bypass lines 48, 50 which remain connected to the pump. The pressure in the first pilot line 24 is substantially equal to the pressure at the pump's second port 62. The pressure in the second pilot line 26 is substantially equal to the pressure at the pump's first port 61. The pressure difference causes the seal in the shuttle valve 7 to block the second shuttle valve port 72 so that the fluid pressure acting on the second end of the spool is substantially equal to the pump's second port pressure.

When one of the motors 4, 6 becomes blocked the flow in the motors 4, 6 slows or stops. The pressure at the pump's second port 62 will increase and transmit an increase in force acting on the spool sufficient to compress the spring 32, and so the spool will move further into its parallel positions 20 wherein the second port 64 of the first motor 4 is connected to the second bypass line 50 via the second 10 and fourth 16 valve ports, and the first port 65 of the second motor 6 is connected to the first bypass line 48 via the second 12 and third 14 valve ports. The obstruction at one motor does not stop the unobstructed motor. Also the pressure across each motor 4, 6 is greater than for the series connection, so motor torque increases; it is easier to overcome any obstruction.

When the torque requirements decrease the pressure at the pump's second port 62 will decrease. With the reduced force acting on the spool of the valve 8, the spring 32 will urge the valve 8 further into its first positions 18. For example, any slipping wheel will stop slipping and torque can return to the other wheels.

Therefore the proportional valve 8 provides a metering effect wherein valve positions part way between the series positions 18 and the parallel positions 20 can be set in accordance with the balance of forces on the ends of the spool.

In normal running, when the torque requirements of the vehicle are low, the vehicle can remain in series mode and is therefore able to reach higher speeds.

It will be appreciated that with the pump direction reversed a corresponding function is achieved, with the motors 4, 6 now rotating in the other direction. The seal of the shuttle valve 7 now blocks the first shuttle valve port 71 so that the pressure acting on the second end of the spool (left end in Fig. 1) is that in the second bypass line 50.

In this way the hydraulic arrangement 1 can shift between a series and a parallel connection and can do so automatically in accordance with the second port pressure of the pump 2. Since the valve positioning is hydraulically controlled, there is no need for an electronic control system and/or transducers.

### Second Exemplary Embodiment

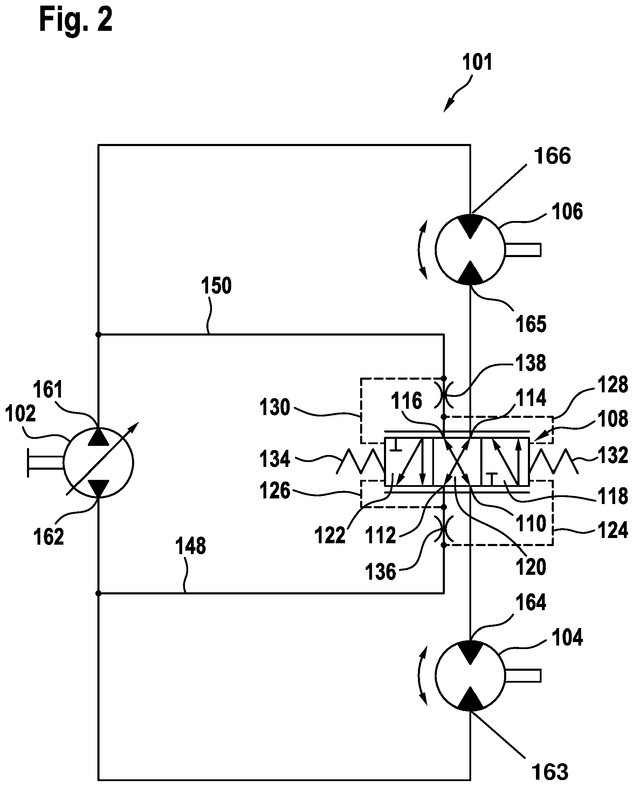

A second exemplary embodiment is shown in Fig. 2. In the following the differences from the first exemplary embodiment will be described.

A valve 108, replacing valve 8, comprises first to fourth ports 110, 112, 114, 116 connected to the second port 164 of the first motor 104, the first bypass line 148, the first port 165 of the second motor 106, and the second bypass line 150, respectively. The valve 108 further comprises a spool movable in a first and a second direction.

The spool is centred in a centre position 120 by a first 132 and a second 134 spring. In the centre position 120, corresponding to a parallel position 120, the first port 110 and the fourth port 116 are connected together and the second port 112 and the third port 114 are connected together. In this way the second port 164 of the first motor 104 is connected to the second bypass line 150 and the first port 165 of the second motor 106 is connected to the first bypass line 148.

The first direction is from the parallel position 120 to first series positions 118 of the valve 108. In the first series positions 118 the first port 110 is connected to both the third 114 and fourth ports 116; any flow into the valve 108 at the valve's third 114 and forth 116 ports is prevented; and the second port 112 is disconnected. In this way the second port 164 of the first motor 104 is connected to the first port 165 of the second motor 106 and additionally to the second bypass line 150.

The second direction of the spool is from the parallel position 120 to second series positions 122 of the valve 108. In the second series positions 122 the third port 114 is connected to both the first 110 and 112 second ports; any flow into the valve 108 from the first 110 and second 112 ports is prevented; and the fourth port 116 is disconnected. In this way the first port 165 of the second motor 106 is connected to the second port 164 of the first motor and additionally connected to the first bypass line 148.

A first 136 and second 138 restrictor (e.g. orifice) is provided in the first 148 and the second 150 bypass line respectively to restrict the flow therethrough.

The arrangement of the pilot lines and the shuttle valve 7 of the first exemplary embodiment is replaced with the following. A first pilot line 124 extends from a position on the first bypass line 148 on a side of the first restrictor 136 further from the valve 108, to a first end (right end in Fig. 2) of the spool so that fluid in the first bypass line 148 can urge said spool end in the first direction. A second pilot line 126 extends from a position on the first bypass line 148 between the valve 108 and the first restrictor 136 to a second end (left end in Fig. 2) of the spool so that fluid in the first bypass line 148 can urge said spool end in the second direction. A third pilot line 128 extends from a position on the second bypass line 150 between the valve 108 and the second restrictor 138 to a first end (right end in Fig. 2) of the spool so that fluid in the second bypass line 150 can urge said spool end in the first direction. A fourth pilot line 130 extends from a position on the second bypass line 150 on a side of the second restrictor 138 further from the valve 108 to a second end (left end in Fig. 2) of the spool so that fluid in the second bypass line 150 can urge said spool end in the second direction.

The function of the hydraulic arrangement 101 of Fig. 2 under counterclockwise flow is described as follows. At first the valve 108 is in the parallel position 120. Fluid exits the second port 162 of the pump 102 and splits into a flow through the first bypass line 148, the valve 108, and the second motor; and a flow through the first motor 104, the valve 108 and the second bypass line 150. The flows meet before returning to the pump 102 via its first inlet 161.

When one of the wheels slips the flow rate across a restrictor 136, 138 rises, as does the pressure difference across that restrictor. Thus the spool of the valve 108 is urged by the pressurized fluid in the pilot lines 124, 126, 128, 130 in the first direction to the first series positions 118.

Under the first series positions 118 the fluid flows from the second port 162 of the pump 102 through the first motor 104 into the first valve port 110; it splits into a flow from the third valve port 114 to the first motor 104 and a flow from the fourth valve port 116 to the second bypass line 150. The two flows join before reaching the pump's first port 161.. Even in purely series connection fluid flow is maintained across the restrictor 138; flow-dependent spool movement can be maintained. This also has the effect of maintaining a low pressure in regions in the circuit when vehicle traction is good, which is desirable for improving efficiency.

When wheel slip ceases, the flow rate across the respective restrictor 136, 138 decreases. The spool of the valve 108 returns to its parallel position 120 under the urging force of the springs 132, 134 and the fluid in the pilot lines 124, 126, 128, 130.

The first series positions 118 function only when the flow in the circuit is counterclockwise. The valve 108 is provided with second series positions 122 for a series connection under clockwise flow. The second series positions 122 are placed on the other side of the parallel position 120 from the first series positions 118. Under clockwise flow, when one of the wheels starts to slip, the spool of the valve 108 is urged by the fluid in the pilot lines 124, 126, 128, 130 in the second direction (right in Fig. 2).. Flow from the second motor 106 into the third valve port 114 splits into a flow from the first valve port 110 to the first motor 104 and a flow from the second valve port 112 to the first bypass line 148. The two flows later join before reaching the pump's second port 162. When wheel slip ceases, the spool of the valve 108 returns to its central position 120, as under counterclockwise motion.

In this way the hydraulic arrangement 101 can adjust to any state between a series and a parallel connection, automatically in accordance with the flow rate through each motor 104, 106. The series mode is activated automatically when it is required. A metering effect is achieved wherein the output torque to the motors can be adjusted.

The following modifications may be independently made to the exemplary embodiments described above.

The valve may be integrated into one of the motors. An additional port may be provided on the valve which allows access to the circuit when the motor is running e.g. in series, and therefore allows for an anti-cavitation connection into the circuit, and/or for the addition of other auxiliary hydraulic equipment.

A hydraulic system may comprise a pair of hydraulic arrangements, more specifically having a respective hydraulic arrangement for driving the wheels on each side of a vehicle. For example each wheel may be drivably coupled to a respective hydraulic motor. As another example each motor may be drivingly coupled to a plurality of wheels, such as via an axle or chains. The circuits may further preferably share a common pump.

Each side of the vehicle may preferably have a separate valve or there may be one valve which contains the operations for both sides.

### Reference Signs

- 1; 101: hydraulic arrangement
- 2; 102: pump
- 4; 104: first hydraulic motor
- 6; 106: second hydraulic motor
- 7: shuttle valve
- 8; 108: proportional valve
- 10; 110: first port, proportional valve
- 12;112: second port, proportional valve
- 14; 114: third port, proportional valve
- 16; 116: fourth port, proportional valve
- 18; 118: first positions, proportional valve
- 20; 120: second positions, proportional valve
- 122: third positions, proportional valve
- 24; 124: first pilot line
- 26; 126: second pilot line
- 28; 128: third pilot line
- 130: fourth pilot line
- 32; 132: (first) urging means
- 134: second urging means
- 136: first restrictor
- 138: second restrictor
- 48; 148: first bypass line
- 50; 150: second bypass line
- 61; 161: first port of pump
- 62; 162: second port of pump
- 63; 163: first port of first motor
- 64; 164: second port of first motor
- 65; 165: first port of second motor
- 66**;** 166: second port of second motor
- 71: first port of shuttle valve
- 72: second port of shuttle valve
- 73: third port of shuttle valve
- 74: node of shuttle valve

## Claims

1. Hydraulic arrangement comprising:
a pressure source (2; 102) having a first port and a second port;
two hydraulic machines (4, 6; 104, 106) each having a first port and a second port; and
at least one valve (8; 108),
wherein the at least one valve is configured for changing a connection of the hydraulic machines between a series connection and a parallel connection, and has a spool movable between at least two positions, and
the first machine's second port (64; 164) and the second machine's first port (65; 165) are connected to the valve, the first port (61; 161) of the pressure source is connected to the second port (66; 166) of the second hydraulic machine, and the second port (62; 162) of the pressure source is connected to the first port (63; 163) of the first hydraulic machine, so as to create series and parallel circuits sharing common lines, **characterized in that**
the at least one valve. (8; 108) comprises a spool position which is dependent on a pressure of the pressure source.

2. Hydraulic arrangement according to claim 1, wherein the at least one valve includes a proportional valve.

3. Hydraulic arrangement according to claim 1 or 2, wherein only one valve is configured for changing the connection of the hydraulic machines between the series connection and the parallel connection.

4. Hydraulic arrangement according to any one of the preceding claims, wherein the at least one valve comprises a valve position which is dependent on a flow rate through a hydraulic machine (104; 106).

5. Hydraulic arrangement according to any one of the preceding claims, wherein under a series connection, a bypass line (150) having a restrictor (138) is connected across a hydraulic machine (104).

6. Hydraulic arrangement according to any one of the preceding claims, wherein the at least one valve is integrated with a hydraulic machine.

7. Hydraulic arrangement according to any one of the preceding claims, wherein the at least one valve is actuatable by any of hydraulic, electrical, and manual means.

8. Hydraulic arrangement according to any one of the preceding claims, wherein the at least one valve comprises ports connecting the machines and the pump into a circuit, and an auxiliary port for connecting at least one other component into the circuit.

9. Hydraulic system comprising two or more hydraulic arrangements according to any one of the preceding claims.

10. Hydraulic system according to claim 9, wherein two or more valves are integrated into a single valve assembly.

11. Hydraulically drivable vehicle comprising
the hydraulic system according to claim 9 or 10, and
a plurality of wheels drivably coupled to the hydraulic machines.

12. Hydraulically drivable vehicle according to claim 11, wherein
the wheels on each side of the vehicle are drivably coupled to a respective hydraulic arrangement (1; 101).

## Patentansprüche

1. Hydraulische Anordnung, umfassend:
eine Druckquelle (2; 102) mit einem ersten Anschluss und einem zweiten Anschluss;
zwei hydraulische Maschinen (4, 6; 104, 106), die jeweils einen ersten Anschluss und einen zweiten Anschluss aufweisen; und
zumindest ein Ventil (8; 108),
wobei das zumindest eine Ventil dazu konfiguriert ist, eine Verbindung der hydraulischen Maschinen zwischen einer Reihenschaltung und einer Parallelschaltung zu ändern, und einen zwischen zumindest zwei Stellungen bewegbaren Schieber aufweist und
wobei der zweite Anschluss (64; 164) der ersten Maschine und der erste Anschluss (65; 165) der zweiten Maschine mit dem Ventil verbunden sind, der erste Anschluss (61; 161) der Druckquelle mit dem zweiten Anschluss (66; 166) der zweiten hydraulischen Maschine, verbunden ist und der zweite Anschluss (62; 162) der Druckquelle mit dem ersten Anschluss (63; 163) der ersten hydraulischen Maschine verbunden ist, um eine Reihen- und eine Parallelschaltung zu bilden, die sich gemeinsame Leitungen teilen,
**dadurch gekennzeichnet, dass** zumindest ein Ventil (8; 108) eine Schieberstellung aufweist, die von einem Druck der Druckquelle abhängig ist.

2. Hydraulische Anordnung nach Anspruch 1, wobei das zumindest eine Ventil ein Proportionalventil beinhaltet.

3. Hydraulische Anordnung nach Anspruch 1 oder 2, wobei nur ein Ventil dazu konfiguriert ist, die Verbindung der hydraulischen Maschinen zwischen der Reihenschaltung und der Parallelschaltung zu ändern.

4. Hydraulische Anordnung nach einem der vorangehenden Ansprüche, wobei das zumindest eine Ventil eine Ventilstellung umfasst, die von einer Durchflussmenge durch eine hydraulische Maschine (104; 106) abhängig ist.

5. Hydraulische Anordnung nach einem der vorangehenden Ansprüche, wobei unter einer Reihenschaltung eine Bypassleitung (150) mit einer Drossel (138) über eine hydraulische Maschine (104) verbunden ist.

6. Hydraulische Anordnung nach einem der vorangehenden Ansprüche, wobei das zumindest eine Ventil in eine hydraulische Maschine integriert ist.

7. Hydraulische Anordnung nach einem der vorangehenden Ansprüche, wobei das zumindest eine Ventil durch hydraulische, elektrische und manuelle Mittel betätigbar ist.

8. Hydraulische Anordnung nach einem der vorangehenden Ansprüche, wobei das zumindest eine Ventil Anschlüsse, die die Maschinen und die Pumpe zu einem Kreislauf verbinden, und einen Hilfsanschluss zum Verbinden zumindest einer anderen Komponente mit dem Kreislauf umfasst.

9. Hydraulisches System, umfassend zwei oder mehr hydraulische Anordnungen nach einem der vorangehenden Ansprüche.

10. Hydraulisches System nach Anspruch 9, wobei zwei oder mehr Ventile in eine einzige Ventilanordnung integriert sind.

11. Hydraulisch antreibbares Fahrzeug, umfassend das hydraulische System nach Anspruch 9 oder 10 und mehrere Räder, die antreibbar mit den hydraulischen Maschinen gekoppelt sind.

12. Hydraulisch antreibbares Fahrzeug nach Anspruch 11, wobei die Räder auf jeder Seite des Fahrzeugs antreibbar mit einer jeweiligen hydraulischen Anordnung (1; 101) gekoppelt sind.

## Revendications

1. Dispositif hydraulique comprenant :
une source de pression (2 ; 102) comportant un premier port et un second port ;
deux machines hydrauliques (4, 6 ; 104, 106) comportant chacune un premier port et un second port ; et
au moins un robinet (8 ; 108),
dans lequel l'au moins un robinet est conçu pour modifier un raccord des machines hydrauliques entre un raccord en série et un raccord en parallèle, et comprend un tiroir pouvant se déplacer entre au moins deux positions, et
le second port (64 ; 164) de la première machine et le premier port (35 ; 165) de la seconde machine sont raccordés au robinet, le premier port (61 ; 161) de la source de pression est raccordé au second port (66 ; 166) de la seconde machine hydraulique, et le second port (62 ; 162) de la source de pression est raccordé au premier port (63 ; 163) de la première machine hydraulique, de façon à créer des circuits en série et en parallèle partageant des conduites communes, **caractérisé en ce que**
l'au moins un robinet (8 ; 108) comprend une position de tiroir qui dépend d'une pression de la source de pression.

2. Dispositif hydraulique selon la revendication 1, dans lequel l'au moins un robinet comprend un robinet proportionnel.

3. Dispositif hydraulique selon la revendication 1 ou 2, dans lequel un seul robinet est conçu pour modifier le raccord des machines hydrauliques entre le raccord en série et le raccord en parallèle.

4. Dispositif hydraulique selon l'une quelconque des revendications précédentes, dans lequel l'au moins un robinet comprend une position de robinet qui dépend d'un débit à travers une machine hydraulique (104 ; 106).

5. Dispositif hydraulique selon l'une quelconque des revendications précédentes, dans lequel dans un raccord en série, une conduite de dérivation (150) comprenant un restricteur (138) est raccordée à une machine hydraulique (104) .

6. Dispositif hydraulique selon l'une quelconque des revendications précédentes, dans lequel l'au moins un robinet est intégré à une machine hydraulique.

7. Dispositif hydraulique selon l'une quelconque des revendications précédentes, dans lequel l'au moins un robinet peut être actionné par l'un quelconque de moyens hydrauliques, électriques et manuels.

8. Dispositif hydraulique selon l'une quelconque des revendications précédentes, dans lequel l'au moins un robinet comprend des ports raccordant les machines et la pompe en un circuit, et un port auxiliaire destiné à raccorder au moins un autre composant au circuit.

9. Système hydraulique comprenant au moins deux dispositifs hydrauliques selon l'une quelconque des revendications précédentes.

10. Système hydraulique selon la revendication 9, dans lequel deux robinets ou plus sont intégrés en un seul ensemble de robinet.

11. Véhicule à entraînement hydraulique comprenant :
le système hydraulique selon la revendication 9 ou 10, et
une pluralité de roues couplées en entraînement aux machines hydrauliques.

12. Véhicule à entraînement hydraulique selon la revendication 11, dans lequel
les roues sur chaque côté du véhicule sont couplées en entraînement à un dispositif hydraulique respectif (1 ; 101) .
